# EUROPÄISCHE PATENTSCHRIFT

(11) **EP 1 250 106 B1**
(45) Veröffentlichungstag und Bekanntmachung des Hinweises auf die Patenterteilung: **28.07.2004**
(21) Anmeldenummer: 01915164.6
(22) Anmeldetag: 25.01.2001
(51) Int. Cl.: A61C 5/02, A61C 17/02

(54) **SPÜLKANÜLE ZUM SPÜLEN EINES WURZELKANALS EINES ZAHNES**
RINSING CANNULA FOR RINSING A ROOT CANAL OF A TOOTH
CANULE DE RIN AGE POUR RINCER LE CANAL RADICULAIRE D'UNE DENT

(30) Priorität: 29.01.2000 DE 20001584 U
(43) Veröffentlichungstag der Anmeldung: 23.10.2002
(73) Patentinhaber: Zirkel, Christoph Dr., 50931 Köln (DE)
(72) Erfinder: ZIRKEL, Christoph, 50931 Köln (DE)
(74) Vertreter: Maucher, Wolfgang, Dipl.-Ing.
(86) Internationale Anmeldenummer: PCT/EP2001/000833
(87) Internationale Veröffentlichungsnummer: WO 2001/054608

(56) Entgegenhaltungen:
- EP-A- 0 290 011
- US-A- 4 276 880
- US-A- 5 893 713
- PATENT ABSTRACTS OF JAPAN vol. 016, no. 552 (C-1006), 20. November 1992 (1992-11-20) -& JP 04 212343 A (SATOSHI FUKUTSUJI), 3. August 1992 (1992-08-03)

## Beschreibung

Die Erfindung betrifft eine Spülkanüle zum Spülen eines Wurzelkanals eines Zahnes, wobei die Spülkanüle einen Zuführkanal für eine Spülflüssigkeit hat, der an dem proximalen, mit einer Spritze oder dergleichen Flüssigkeitszuführung verbunden oder verbindbaren Endbereich der Spülkanüle wenigstens eine Eintrittsöffnung und an dem distalen, in Gebrauchsstellung in den Wurzelkanal eingeführten Endbereich der Spülkanüle zuindest eine Austrittsöffnung für die Spülflüssigkeit aufweist.

Die Spülung des Wurzelkanals mit antibakteriell wirksamen und gewebeauflösenden Spülflüssigkeiten, das chemische Debridement, ist in der Zahnmedizin ein wesentlicher Bestandteil der Wurzelkanalaufbereitung. In zahlreichen Studien konnte nachgewiesen werden, daß es allein mit mechanischen Mitteln nicht möglich ist, alle Bereiche des Endodonts ausreichend zu bearbeiten. Es bleiben immer unterschiedlich ausgedehnte, nicht instrumentierte Wandbezirke zurück. Nach einer mechanischen instrumentellen Bearbeitung ist die Wurzelkanalwand darüber hinaus mit Debris und einer Schmierschicht bedeckt, die aus Dentinabrieb besteht, aber auch Bakterien enthalten kann. Da diese Schmierschicht die Dichtigkeit der bei einer Wurzelbehandlung in den Wurzelkanal einzufüllenden Wurzelkanalfüllung herabsetzt und Quelle einer Reinfektion des Endodonts sein kann, sollte sie durch Spülungen mit adäquaten Agenzien weitgehend entfernt werden. Durch die Wurzelkanalspülung können darüber hinaus aber auch in dem Wurzelkanal befindliche Dentinspäne, welche den Wurzelkanal blockieren können, entfernt werden. Außerdem ermöglicht die Wurzelkanalspülung eine Auflösung des organischen und anorganischen Wurzelkanalinhalts, auch in Bereichen des komplexen endodontischen Systems, die der instrumentellen Bearbeitung nicht zugänglich sind. Hierdurch wird eventuell zurückbleibenden Bakterien ein Großteil des zu ihrem Überleben notwendigen Substrats entzogen. Weitere Aufgaben der Wurzelkanalspülung sind die Desinfektion des Endodonts, das Einbringen eines Gleitmittels für in den Wurzelkanal einzuführende Wurzelkanalinstrumente sowie eine Bleichwirkung auf die koronalen und radikulären Zahnhärtsubstanzen.

Aus EP-A 0 290 011 ist bereits eine Spülkanüle der eingangs genannten Art bekannt, die an ein aus Edelstahl bestehendes Kanülenteil aufweist, das mit seinem einen Ende mit einer einen Spülflüssigkeitsvorrat beinhaltenden Spritze verbindbar ist. An ihrem anderen, in Gebrauchsstellung in den Wurzelkanal eingeführten Ende weist das Kanülenteil an einander gegenüberliegenden Seiten zwei in Erstreckungsrichtung des Kanülenteils zueinander versetzt angeordnete Austrittsöffnungen für die Spülflüssigkeit auf, die über einen das Kanülenteil axial durchsetzenden Zuführkanal mit dem Spülflüssigkeitsvorrat verbundenen sind. Durch diese Austrittsöffnungen hindurch wird die Spülflüssigkeit in den Wurzelkanal eingebracht.

Die Spülkanüle hat jedoch den Nachteil, dass sie sich aufgrund der in der Praxis immer vorhandenen Krümmung des Wurzelkanals nur teilweise in den Wurzelkanal einführen lässt, wodurch das Spülen des Wurzelkanals im Bereich der Wurzelspitze erschwert wird. Im Bereich der Wurzelspitze können dann in dem Wurzelkanal organische oder anorganische Rückstände verbleiben, die zu einer Reinfektion des Endodonts führen können.

Aus US-A 4 276 880 ist ferner eine Saug-/Spülkanüle für eine kombinierte Saug-/Spülvorrichtung bekannt, deren Kanülenteil eine gewisse Biegsteifigkeit aufweist. Die Saug-/Spülkanüle hat an ihrem distalen Endbereich diametral einander gegenüberliegend angeordnete Öffnungen, die einerseits den hydraulischen Druck in dem den Zahn umgebenden Gewebe reduzieren sollen und durch die andererseits soll ein größerer Wirkungsgrad beim Absaugen zu erreicht werden soll. Auch diese Kanüle ermöglicht nur eine begrenzte Reinigung des Wurzelkanals im Bereich der Wurzelspitze.

Es besteht deshalb die Aufgabe, eine Spülkanüle der eingangs genannten Art zu schaffen, die auch bei gekrümmten Wurzelkanälen auf einfache Weise über die gesamte Länge des Wurzelkanals eine vollständige Durchspülung des Wurzelkanals mit der Spülflüssigkeit ermöglicht.

Die Lösung dieser Aufgabe besteht darin dass der distale Endbereich der Spülkanüle zum flexiblen Anpassen des Endbereichs an den Verlauf des Wurzelkanals beim Einführen aus Titan oder einer Titan-Legierung besteht, und dass die Austrittsöffnungen an dem distalen Endbereich der Spülkanüle diametral einander gegenüberliegend angeordnet sind.

Der distale Endbereich der Spülkanüle ist also flexibel ausgebildet, so dass er sich bei der Einführbewegung in seinem Verlauf an die Krümmung des Wurzelkanals anpasst. In vorteilhafter Weise kann dadurch die Spülkanüle bis zur Wurzelspitze in den Wurzelkanal eingeführt werden, so dass dieser über seine gesamte Länge mit der Spülflüssigkeit durchspült werden kann. Durch die diametral einander gegenüberliegend angeordneten Austrittsöffnungen wird einerseits eine gute mechanische Stabilität des Kanülenteils im Bereich der Austrittsöffnungen erreicht und andererseits wird die Spülflüssigkeit gleichmäßig in den Wurzelkanal eingeleitet. Die Spülkanüle ermöglicht dadurch eine vollständige Reinigung und Desinfektion des Wurzelkanals. Insbesondere wird die Gefahr einer Reinfizierung des Wurzelkanals durch in dem Wurzelkanal verbleibende organische oder anorganische Rückstände weitestgehend vermieden.

Besonders vorteilhaft ist, wenn die Titan-Legierung eine Formgedächtnis-Legierung ist und insbesondere Nickel und/oder Aluminium als Legierungsbestandteil(e) enthält. Die Spülkanüle paßt sich dann in Gebrauchsstellung flexibel an die jeweilige Krümmung des Wurzelkanals an, nimmt aber nach der Entnahme aus dem Wurzelkanal aufgrund des Formgedächtnis- oder Memoryeffekts wieder ihre ursprüngliche, vorzugsweise gerade Form ein. Dabei kann die Spülkanüle nach der Entnahme aus dem Wurzelkanal ggf. einer Temperaturbehandlung unterzogen werden, um die durch den Memoryeffekt bewirkte Rückführung zu ihrer ursprünglichen Formgebung zu unterstützen. Somit wird bei einem erneuten Einführen der Spülkanüle in einen Wurzelkanal eine durch eine Vorbiegung der Spülkanüle verursachte Materialspannung in der Spülkanüle vermieden, so dass die Gefahr eines Abbrechens der Spülkanüle beim Einsetzen oder Entnehmen aus dem Wurzelkanal sowie während des Spülvorganges weitestgehend vermieden ist. Die Spülkanüle eignet sich besonders für eine mehrfache Verwendung.

Bei einer vorteilhaften Ausführungsform der Erfindung ist vorgesehen, dass die Austrittsöffnungen durch eine Perforation der seitlichen Begrenzungswand des Zuführkanals gebildet sind. Die Spülkanüle ermöglicht dann eine noch bessere und gleichmäßigere Reinigung des gesamten Wurzelkanals.

An dem proximalen Endbereich der Spülkanüle kann eine vorzugsweise ein Schraubgewinde aufweisende Kupplungsaufnahme zum lösbaren Verbinden mit einem dazu passenden Kupplungsgegenstück einer Spritze oder dergleichen Flüssigkeitszuführung vorgesehen sein. Die aus Kupplungsaufnahme und Kupplungsgegenstück gebildete Kupplung ermöglicht dann in Gebrauchsstellung eine gute Fixierung der Spülkanüle an der Spritze, wobei die Kupplung aber dennoch leicht lösbar ist, wenn die Spülkanüle beispielsweise einem Autoklaven sterilisiert werden muss.

Nachfolgend ist ein Ausführungsbeispiel der Erfindung anhand der Zeichnung näher erläutert. Es zeigen zum Teil stärker schematisiert:
- Fig. 1: eine schematisch dargestellte Seitenansicht einer Spülkanüle und
- Fig. 2: einen Längsschnitt durch einen Zahn, in dessen Wurzelkanal die Spülkanüle eingeführt ist.

Eine im ganzen mit 1 bezeichnete Spülkanüle zum Spülen eines Wurzelkanals 2 eines Zahns 3 weist ein Kanülenteil 4 mit einem darin befindlichen Zuführkanal für eine Spülflüssigkeit auf. An einem der Axialenden des Kanülenteils 4 ist eine Kupplungsaufnahme 5 angeordnet, die lösbar mit einem dazu passenden Kupplungsgegenstück einer einen Spülflüssigkeitsvorrat aufweisenden Spritze verbindbar ist. Der Zuführkanal weist an der Kupplungsaufnahme 5 eine Eintrittsöffnung 6 und an dem der Kupplungsaufnahme 5 abgewandten distalen Endbereich des Kanülenteils 4 Austrittsöffnungen 7 für die Spülflüssigkeit auf.

Das Kanülenteil 4 besteht aus einer biegbaren Titan-Legierung, die beispielsweise zwischen 40 und 60 Gewichtsprozente Titan und wenigstens einen weiteren Legierungsbestandteil enthalten kann, nämlich ein weiches Metall, wie zum Beispiel Nickel oder Aluminium. Das Material des Kanülenteils 4 weist einen Memoryeffekt auf, d.h. es verformt sich bei Biegebeanspruchung und nimmt seine ursprüngliche Form im wesentlichen wieder ein, wenn die Biegebeanspruchung entfernt wird.

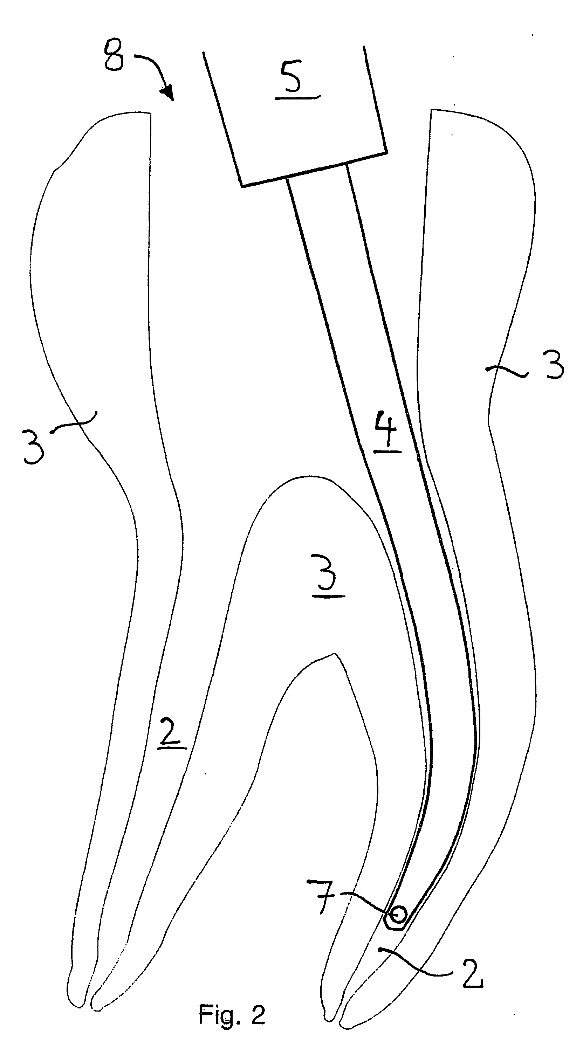

Zum Spülen des Wurzelkanals 2 wird der die Austrittsöffnungen 7 aufweisende distale Endbereich der Spülkanüle 1 durch eine zuvor in den Zahn 3 eingebrachte Öffnung 8 hindurch in den Wurzelkanal 2 eingeführt. Dabei wird das Kanülenteil 4 durch die beim Einführen auf die Spülkanüle 1 ausgeübte Einführkraft flexibel verformt und paßt sich in ihrem Verlauf an den gekrümmten Verlauf des Wurzelkanals 2 an. In Fig. 2 ist deutlich erkennbar, dass das in den Wurzelkanal 2 eingeführte freie Ende des Kanülenteils 4 entsprechend dem Verlauf des Wurzelkanals 2 gegenüber den übrigen Bereichen des Kanülenteils 4 abgewinkelt ist. Das Kanülenteil 4 kann dadurch bis zur Wurzelspitze in den Wurzelkanal 2 eingeführt werden. Danach wird durch Betätigen der Spritze die Spülflüssigkeit durch die Austrittsöffnungen 7 hindurch in den Wurzelkanal 2 eingeleitet. Dabei wird der praktisch der gesamte in dem Wurzelkanal 2 befindliche organische und anorganische Wurzelkanalinhalt aus dem Wurzelkanal 2 ausgespült und der Wurzelkanal 2 wird desinfiziert.

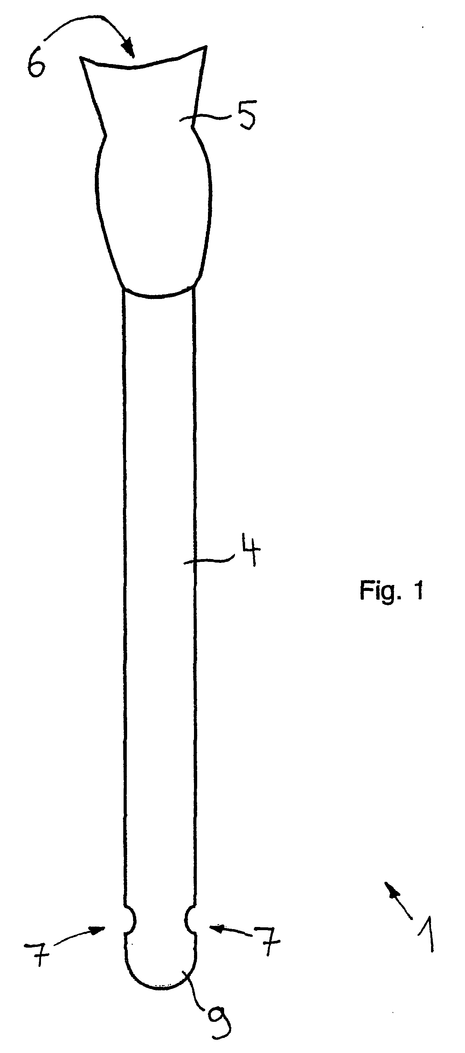

In Fig. 1 ist erkennbar, dass die Spülkanüle 1 an ihrem distalen Endbereich stirnseitig mit einem Kappenteil 9 verschlossen ist und dass die Austrittsöffnungen 7 seitlich an dem distalen Endbereich der Spülkanüle 1 angeordnet sind. Dabei sind zwei Austrittsöffnungen 7 diametral einander gegenüberliegend am Umfang des Kanülenteils 4 vorgesehen. Selbstverständlich sind jedoch auch andere Ausführungsformen denkbar, bei denen mehr Austrittsöffnungen 7 am Umfang des Kanülenteils 4 verteilt angeordnet sein können. Die Austrittsöffnungen 7 können beispielsweise durch in Wandung des Kanülenteils 4 eingebrachte Einfräsungen und/oder Bohrungen hergestellt sein.

Die Spülkanüle 1 weist also zum Spülen eines Wurzelkanals 2 eines Zahnes 3 einen Zuführkanal für Spülflüssigkeit auf. An dem proximalen, mit einer Spritze oder dergleichen Flüssigkeitszuführung verbunden oder verbindbaren Endbereich der Spülkanüle 1 ist wenigstens eine Eintrittsöffnung 6 und an dem distalen, in Gebrauchsstellung in den Wurzelkanal 2 eingeführten Endbereich der Spülkanüle 1 zuindest eine Austrittsöffnung 7 für die Spülflüssigkeit vorgesehen. Der distale Endbereich der Spülkanüle 1 besteht aus Titan oder einer Titan-Legierung, zum flexibelen Anpassen des Endbereichs an den Verlauf des Wurzelkanals 2 beim Einführen.

## Patentansprüche

1. Spülkanüle (1) zum Spülen eines Wurzelkanals (2) eines Zahnes (3), wobei die Spülkanüle (1) einen Zuführkanal für eine Spülflüssigkeit hat, der an dem proximalen, mit einer Spritze oder dergleichen Flüssigkeitszuführung verbunden oder verbindbaren Endbereich der Spülkanüle (1) wenigstens eine Eintrittsöffnung (6) und an dem distalen, in Gebrauchsstellung in den Wurzelkanal (2) eingeführten, stirnseitig verschlossen Endbereich der Spülkanüle (1) seitliche Austrittsöffnungen (7) für die Spülflüssigkeit aufweist, **dadurch gekennzeichnet, dass** der distale Endbereich der Spülkanüle (1) zum flexiblen Anpassen des Endbereichs an den Verlauf des Wurzelkanals (2) beim Einführen aus Titan oder einer Titan-Legierung besteht, und dass die Austrittsöffnungen (7) an dem distalen Endbereich der Spülkanüle (1) diametral einander gegenüberliegend angeordnet sind.

2. Spülkanüle (1) nach Anspruch 1, **dadurch gekennzeichnet, dass** die Titan-Legierung eine Formgedächtnis-Legierung ist und insbesondere Nickel und/oder Aluminium als Legierungsbestandteil(e) enthält.

3. Spülkanüle (1) nach Anspruch 1 oder 2, **dadurch gekennzeichnet, dass** die Austrittsöffnungen (7) durch eine Perforation der seitlichen Begrenzungswand des Zuführkanals gebildet sind.

4. Spülkanüle (1) nach einem der Ansprüche 1 bis 3, **dadurch gekennzeichnet, dass** an dem proximalen Endbereich der Spülkanüle (1) eine vorzugsweise ein Schraubgewinde aufweisende Kupplungsaufnahme (5) zum lösbaren Verbinden mit einem dazu passenden Kupplungsgegenstück einer Spritze oder dergleichen Flüssigkeitszuführung vorgesehen ist.

## Claims

1. Rinsing cannula (1) for rinsing a root canal (2) of a tooth (3), the rinsing cannula (1) having a delivery channel for a rinsing liquid which comprises, at the proximal end region of the rinsing cannula (1) which is connected or connectable to a syringe or similar liquid delivery means, at least one inlet opening (6) and, at the distal end region of the rinsing cannula (1) which is inserted into the root canal (2) in the position of use and which is closed off at the end face, lateral outlet openings (7) for the rinsing liquid, **characterised in that** the distal end region of the rinsing cannula (1) consists of titanium or a titanium alloy for flexibly adapting the end region to the configuration of the root canal (2) during insertion, and **in that** the outlet openings (7) are arranged diametrically opposite one another at the distal end region of the rinsing cannula (1).

2. Rinsing cannula (1) according to claim 1, **characterised in that** the titanium alloy is a shape-memory alloy and in particular contains nickel and/or aluminium as alloy component(s).

3. Rinsing cannula (1) according to claim 1 or 2, **characterised in that** the outlet openings (7) are formed by perforating the lateral boundary wall of the delivery channel.

4. Rinsing cannula (1) according to one of claims 1 to 3, **characterised in that** at the proximal end region of the rinsing cannula (1) is provided a coupling socket (5) preferably having a screw thread for releasably connecting to a mating coupling counterpart of a syringe or similar liquid delivery means.

## Revendications

1. Canule de rinçage (1) pour le rinçage du canal radiculaire (2) d'une dent (3), du type dans lequel la canule de rinçage présente un canal d'introduction pour un liquide de rinçage qui présente, dans la région terminale proximale de la canule de rinçage (1) au moins une ouverture d'entrée (6) reliée ou pouvant être reliée à une seringue ou autre moyen d'alimentation analogue en liquide et dans la région terminale distale de la canule de rinçage (1), fermée du côté frontal, introduite en position d'utilisation dans le canal radiculaire (2) des ouvertures latérales de sortie (7) pour le liquide de rinçage, **caractérisée en ce que** la région terminale distale de la canule de rinçage (1), en vue d'adapter de façon souple la région terminale au trajet du canal radiculaire (2) lors de l'introduction, est réalisée en titane ou en un alliage de titane et **en ce que** les ouvertures de sortie (7) sont disposées diamétralement opposées les unes en face des autres.

2. Canule de rinçage (1) selon la revendication 1, **caractérisée en ce que** l'alliage de titane est constitué par un alliage à mémoire de forme et contient en particulier du nickel et/ou de l'aluminium en tant que composant(s) de l'alliage.

3. Canule de rinçage (1) selon l'une des revendications 1 ou 2, **caractérisée en ce que** les ouvertures de sortie (7) sont constituées par perforation de la paroi de délimitation latérale du canal d'introduction.

4. Canule de rinçage (1) selon l'une quelconque des revendications 1 à 3, **caractérisée en ce que** dans la région proximale de la canule de rinçage (1) est prévu un raccord d'accouplement (5) présentant de préférence un filetage de vis en vue de la liaison détachable avec un élément d'accouplement s'y adaptant d'une seringue ou moyen d'alimentation en liquide analogue.
